# FASCICULE DE BREVET EUROPEEN

(11) **EP 3 126 180 B1**
(45) Date de publication et mention de la délivrance du brevet: **03.03.2021**
(21) Numéro de dépôt: 15702819.2
(22) Date de dépôt: 09.01.2015
(51) Int. Cl.: B60K 37/06, G06F 3/02, G06F 3/023, H01H 9/06, H01H 9/18

(54) **INTERFACE HOMME MACHINE POUR VÉHICULE AUTOMOBILE**
MENSCH-MASCHINE-SCHNITTSTELLE FÜR EIN KRAFTFAHRZEUG
HUMAN-MACHINE INTERFACE FOR A MOTOR VEHICLE

(30) Priorité: 10.01.2014 FR 1450216
(43) Date de publication de la demande: 08.02.2017
(73) Titulaire: DAV, 94046 Créteil Cedex (FR)
(72) Inventeur: TISSOT, Jean-Marc, 94046 Créteil Cedex (FR)
(74) Mandataire: Delplanque, Arnaud
(86) Numéro de dépôt international: PCT/FR2015/000009
(87) Numéro de publication internationale: WO 2015/104482

(56) Documents cités:
- WO-A2-03/080391
- DE-A1-102011 114 051
- GB-A- 2 494 420

## Description

L'invention se rapporte à une interface homme machine pour véhicule automobile ainsi qu'à un tableau de commande de bord de véhicule automobile comprenant une telle interface homme machine.

Les véhicules automobiles intègrent de plus en plus d'équipements pouvant être contrôlés par le conducteur ou les passagers. Les différents équipements présentent une grande variété de fonctions.

De manière générale, l'augmentation du nombre de fonctions entraine une augmentation et une complexification du nombre des dispositifs de commande.

Par exemple, les systèmes d'assistance à la navigation de type GPS multiplient le nombre de boutons de commande disposés sur le tableau de bord du véhicule. Lorsque le nombre de boutons de commande est réduit, il s'ensuit une arborescence des fonctions commandées complexe qui rend l'usage du système difficile et entraine une perte d'attention par le maniement de tels dispositifs de commande de la part du conducteur du véhicule automobile.

Typiquement, les dispositifs de commande utilisant une interface tactile peuvent permettre d'avoir accès à l'ensemble des fonctions du véhicule mais présentent l'inconvénient d'être assez complexes à utiliser. En effet, la navigation entre les différents menus peut nécessiter un grand nombre de tâches de sélection et de validation.

De plus, il peut être complexe pour l'utilisateur d'une interface tactile d'être certain de la prise en compte de sa sélection ou validation. Il faut prévoir des dispositifs de retour haptique complexes et pas toujours très bien perçus par les utilisateurs.

Ainsi, il existe un besoin pour une interface homme machine permettant simplement en utilisant un nombre raisonnable de boutons de commande mécanique de contrôler un grand nombre de fonctions pouvant être utilisées dans un véhicule automobile.

Le document GB 2 494 420 A divulgue une interface homme machine pour véhicule automobile comprenant au moins deux boutons de commande mécanique chacun des boutons étant associé à un moyen de sélection dudit bouton de commande, et des fonctions de différentes familles de fonctions étant affectées à chacun des boutons de commande.

A cet effet, selon un premier aspect, l'invention a pour objet une interface homme machine pour véhicule automobile comprenant au moins deux boutons de commande mécanique, chacun des boutons étant associé à un moyen de sélection dudit bouton de commande, et des fonctions de différentes familles de fonctions étant affectées à chacun des boutons de commande,
remarquable en ce que
suite à la sélection d'un desdits bouton de commande au moyen du moyen de sélection associé, une fonction de la même famille que la fonction affectée audit bouton de commande sélectionné est affectée à l'autre bouton de commande, et
l'interface homme machine est configurée pour communiquer avec un contrôleur permettant de contrôler les fonctions affectées à chacun desdits boutons de commande.

Avantageusement, l'interface homme machine selon l'invention permet un accès et une compréhension simple de différentes fonctions du véhicule automobile, par exemple les fonctions considérées comme prioritaires.

En outre, la possibilité d'affecter différentes fonctions aux différents boutons de commande permet de réduire le nombre de boutons de commande nécessaires pour activer les fonctions du véhicule automobile.

L'interface homme machine selon l'invention peut également comprendre une ou plusieurs des caractéristiques ci-dessous, considérées individuellement ou selon toutes les combinaisons techniquement possibles :
- l'interface homme machine comprend en outre le contrôleur permettant de contrôler les fonctions affectées à chacun desdits boutons de commande ; et/ou
- l'interface homme machine comprend en outre au moins un moyen d'affichage permettant d'afficher une indication visuelle des fonctions affectées à chaque bouton de commande ;et/ou
- chaque bouton de commande est associé à un moyen d'affichage permettant d'afficher une indication visuelle de la fonction affectée audit bouton de commande ; et/ou
- chaque bouton de commande comprend un écran d'affichage ; et/ou
- chaque écran d'affichage est un écran TFT ; et/ou
- chaque écran d'affichage comprend en outre une dalle tactile ; et/ou
- l'interface homme machine comprend en outre au moins un moyen d'émission sonore permettant d'émettre une indication sonore des fonctions affectées à chaque bouton de commande; et/ou
- chaque bouton de commande est associé à un moyen d'émission sonore permettant d'émettre une indication sonore de la fonction affectée audit bouton de commande ; et/ou
- le contrôleur comprend en outre une horloge permettant de mesurer un premier temps écoulé depuis la commande d'une fonction au moyen d'un des boutons de commande et le contrôleur étant configuré pour affecter des fonctions de différentes familles de fonctions à chacun des boutons de commande lorsque le premier temps est supérieure à une première valeur seuil ; et/ou
- le contrôleur est configuré pour que lors de la sélection d'un desdits boutons de commande au moyen du moyen de sélection associé, la fonction affectée à l'autre bouton de commande soit différente de la fonction affectée au bouton de commande sélectionné ; et/ou
- l'interface homme machine comprend en outre un moyen de retour, le contrôleur étant configuré pour affecter des fonctions de différentes familles de fonctions à chacun des boutons de commande lors de l'activation du moyen de retour ; et /ou
- les moyens de sélection comprennent les moyens de retour à l'état initial de configuration des boutons de commande ; et/ou
- le contrôleur comprend en outre une horloge permettant de mesurer un deuxième temps écoulé depuis l'activation d'un des moyens de retour et le contrôleur étant configuré pour prendre en compte la sélection d'un desdits boutons de commande au moyen du moyen de sélection associé lorsque le deuxième temps est supérieur à une deuxième valeur seuil ;et/ou
- les familles de fonctions sont sélectionnées dans la liste consistant à des fonctions de commande de la climatisation du véhicule, des fonctions de commande du système audio du véhicule, des fonctions de commande du système de guidage du véhicule.

L'invention porte également sur un tableau de commande d'un véhicule automobile comprenant une interface homme machine selon l'invention.

L'invention sera mieux comprise à la lecture de la description qui va suivre donnée à titre d'exemple non limitatif de mise en œuvre de celle-ci, et à l'examen des figures annexées sur lesquelles:
- la figure 1 illustre une interface homme machine selon un mode de réalisation de l'invention,
- les figures 2 et 3 illustrent l'interface homme machine de la figure 1, dans laquelle différentes fonctions sont affectées aux boutons de commande.

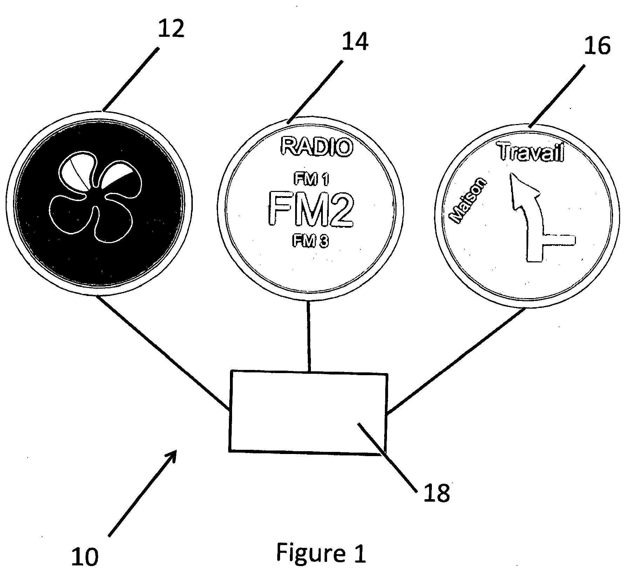

Dans le mode de réalisation représenté sur la figure 1, l'interface homme machine 10 selon l'invention comprend :
- trois boutons de commande mécaniques 12, 14 et 16, et
- un contrôleur 18.

Comme représenté sur la figure 1, les boutons de commande 12, 14 et 16 sont des boutons de commande mécaniques. Ainsi pour actionner une commande associée à chaque bouton, l'utilisateur agit sur le bouton en l'entraînant soit en rotation, soit en translation, soit en combinant les deux types de mouvement.

Dans le mode de réalisation représenté à la figure 1, les boutons de commande 12, 14 et 16 sont de type rotatif. La commande de la fonction est réalisée par un mouvement de rotation d'une bague de commande.

Les boutons de commande de l'interface selon l'invention peuvent également comprendre un mouvement de translation. Par exemple, les boutons de commande 12, 14 et 16 représentés sur la figure 1 peuvent comprendre un mouvement de translation selon leur axe de rotation.

Comme représenté sur la figure 1, une fonction de différentes familles de fonctions du véhicule automobile est affectée à chaque bouton de commandes 12, 14 et 16.

On entend au sens de l'invention par «famille de fonctions» un ensemble de fonctions se rapportant à un même élément du véhicule automobile.

Par exemple, la famille de fonctions se rapportant à la ventilation de l'habitacle du véhicule automobile comprend un ensemble de fonctions se rapportant à la ventilation, comme l'intensité de la ventilation, la température de la ventilation et la direction de la ventilation et toute autre fonction se rapportant au système de ventilation du véhicule

La famille de fonctions se rapportant au système audio du véhicule automobile peut comprendre par exemple le réglage du volume, le choix de la station de radio, le réglage du choix de la source audiophonique, et toute autre fonction se rapportant au système audio du véhicule.

La famille de fonctions se rapportant au système d'aide à la navigation peut comprendre un ensemble de fonction lié à la navigation, comme le choix de la direction, la prise en compte d'un détour, l'utilisation de l'information trafic et toute autre fonctions se rapportant au système de navigation du véhicule.

Ainsi, dans l'exemple de la figure 1, la fonction de l'intensité de la soufflerie du système de ventilation est affectée au premier bouton de commande 12.

La fonction du choix de la station de radio est affectée au deuxième bouton de commande 14.

La fonction du choix de la destination de guidage est affectée au troisième bouton de commande 16.

Chacun des boutons de commande 12, 14 et 16 est associé à un moyen de sélection permettant de sélectionner ledit bouton.

Dans l'exemple représenté en figure 1, le moyen de sélection est différent du moyen de commande du bouton. Le moyen de sélection comprend par exemple un moyen de détection de proximité, par exemple optique ou capacitif, permettant de détecter lorsque l'utilisateur touche ou affleure le bouton de commande associé.

Le moyen de sélection n'est pas limité à un moyen de détection de proximité. Il peut par exemple consister en un moyen de reconnaissance d'une commande vocale ou un système de détection sans contact ou encore être compris dans le moyen de commande du bouton.

Afin de faciliter l'utilisation de l'interface homme machine selon l'invention, il est possible de prévoir au moins un moyen d'affichage permettant d'afficher une indication visuelle des fonctions affectées à chaque bouton de commande 12, 14 et 16.

Par exemple, il est possible de prévoir un écran d'affichage de type TFT disposé au niveau des boutons de commande et permettant l'afficher des icônes et toute autre indication visuelle des fonctions affectées à chacun des boutons de commande.

Selon un mode de réalisation préféré, chaque bouton de commande est associé à un moyen d'affichage permettant d'afficher une indication visuelle de la fonction affectée audit bouton de commande. Comme représenté sur la figure 1, chaque bouton de commande peut comprendre un écran d'affichage par exemple un écran de type TFT, permettant d'afficher un élément représentatif de la fonction affectée audit bouton. Les écrans des boutons de commande peuvent également comprendre des dalles tactiles transparentes disposées devant chaque écran.

Le contrôleur 18 permet de contrôler les fonctions affectées à chacun des boutons de commande 12, 14 et 16.

En particulier, le contrôleur 18 est configuré pour que, par la sélection d'un desdits boutons de commande au moyen du moyen de sélection associé, des fonctions de la même famille que la fonction affectée audit bouton de commande sélectionné soit affectée aux autres boutons de commande.

Selon les modes de réalisation, le contrôleur 18 peut être compris dans l'interface homme machine ou être extérieur à l'interface homme machine, l'interface homme machine étant configurée à communiquer avec le contrôleur 18.

Typiquement, sur l'exemple illustré sur la figure 1, lorsque l'utilisateur sélectionne, en touchant le premier bouton de commande 12, le contrôleur 18 affecte aux deuxième et troisième boutons de commande des fonctions de la même famille que la fonction affectée au premier bouton.

Dans le cas de la figure 1, le premier bouton de commande 12 est affecté à la fonction de réglage de l'intensité de la ventilation du véhicule appartenant à la famille des fonctions liées au système de chauffage/climatisation du véhicule.

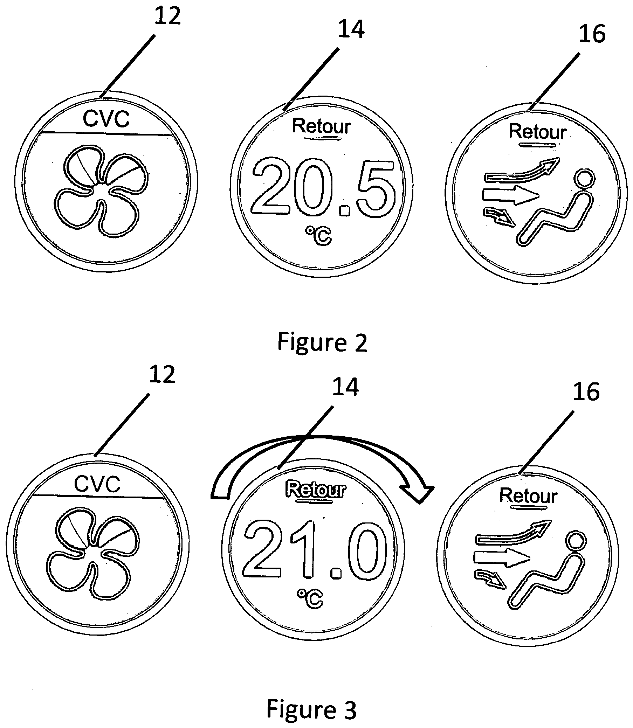

Comme représenté sur la figure 2, lors de la sélection du premier bouton de commande 12, le contrôleur 18 affecte la fonction de réglage de la température au deuxième bouton de commande 14 et la fonction de réglage de la direction de la ventilation au troisième bouton de commande 16.

Ainsi, par sélection du premier bouton, l'utilisateur peut avoir accès à d'autres fonctions liées au système de ventilation de l'habitacle du véhicule automobile.

Une indication visuelle permet d'indiquer à l'utilisateur le changement d'affectation des boutons de commande.

Comme représenté sur la figure 3, l'utilisateur peut utiliser le deuxième bouton pour régler la consigne de température dans l'habitacle, par exemple l'augmenter de 20,5°C à 21°C.

Dans l'exemple des figures 2 et 3, l'utilisateur a accès à deux autres fonctions de la famille des fonctions liées à la ventilation de l'habitacle du véhicule et peut contrôler ces deux autres fonctions au moyen de boutons de contrôle mécanique.

Bien que non illustré, l'utilisateur peut, en sélectionnant le deuxième bouton de commande 14 accéder à deux autres fonctions liées au système audio du véhicule et encore une fois contrôler ces deux fonctions au moyen de boutons de commande mécanique.

De même, en sélectionnant le troisième bouton de commande 16, il est possible d'accéder à deux autres fonctions liées au système de guidage du véhicule et encore une fois contrôler ces deux fonctions au moyen de boutons de commande mécanique.

Ainsi, l'interface homme machine illustré sur la figure 1 permet de contrôler très facilement au moins neuf fonctions du véhicule automobile au moyen de seulement trois boutons de commande mécanique.

Selon un mode de réalisation, le contrôleur comprend en outre une horloge. L'horloge permet de mesurer par exemple un premier temps écoulé depuis la commande d'une fonction au moyen d'un des boutons de commande. Le contrôleur est configuré pour affecter des fonctions de différentes familles de fonctions à chacun des boutons de commande lorsque le premier temps est supérieur à une première valeur seuil. De préférence, la première valeur seuil est de l'ordre de quelque secondes, par exemple 1 à 3 secondes.

Typiquement, l'horloge permet de mesurer le temps écoulé depuis que l'utilisateur a réglé la consigne de température à 21°C et lorsque le temps écoulé devient supérieur à une première valeur seuil, le contrôleur affecte les fonctions initiales à chacun des boutons de commande.

Afin de permettre à l'utilisateur de naviguer parmi les fonctions disponibles le plus rapidement, l'interface homme machine selon l'invention peut comprendre en outre un moyen de retour.

Lors de l'activation du moyen de retour, le contrôleur affecte des fonctions de différentes familles de fonctions à chacun des boutons de commande, typiquement le contrôleur affecte les fonctions initiales à chacun des boutons de commande.

Le moyen de retour peut être différent du moyen de commande du bouton. Le moyen de retour comprend par exemple un moyen de détection de proximité, par exemple optique ou capacitif, permettant de détecter lorsque la main de l'utilisateur s'éloigne des boutons de commande.

Le moyen de sélection n'est pas limité à un moyen de détection de proximité. Il peut par exemple consister en un moyen de reconnaissance d'une commande vocale ou en un système de détection sans contact ou encore être compris dans le moyen de commande du bouton.

Chaque bouton de commande peut comprendre un moyen de retour. Comme représenté sur les figures 2 et 3, le moyen de retour peut consister en la totalité ou une partie de l'écran tactile associé aux boutons dont la fonction a été réaffectée par le contrôleur. L'utilisateur peut ainsi par contact avec ces parties de l'écran indiquer au contrôleur sa volonté de revenir à l'état initial.

L'horloge du contrôleur peut permettre de mesurer un deuxième temps écoulé depuis l'activation d'un des moyens de retour. Le contrôleur est configuré pour prendre en compte la sélection d'un desdits bouton de commande au moyen du moyen de sélection associé lorsque le deuxième temps est supérieur à une deuxième valeur seuil. Typiquement la deuxième valeur seuil est de l'ordre de la seconde, par exemple entre 500ms et 1,5 s.

Avantageusement, cela permet d'éviter des sélections involontaires des boutons de commandes. En effet, lorsque les moyens de retour sont compris dans les moyens de sélection, le contrôleur risque d'interpréter une activation prolongée des moyens de retour comme une activation des moyens de sélection. L'utilisation de l'horloge et de la deuxième valeur seuil permet d'éviter une sélection involontaire.

Bien entendu, l'invention ne se limite pas aux modes de réalisation décrits et s'étend à d'autres variantes dans la portée des revendications.

Dans la présente, le mot «comprenant» n'exclut pas d'autres éléments, et l'article indéfini «un» ou «une» n'exclut pas une pluralité. Le simple fait que différentes caractéristiques soient citées ensembles dans différentes revendications dépendantes ou au sein d'une même revendication n'indique pas que la combinaison de ces caractéristiques ne peut être utilisée avantageusement de manière isolée. Tout signe de référence dans les revendications ne doit pas être interprété comme limitant la portée de l'invention.

## Revendications

1. Interface homme machine (10) pour véhicule automobile comprenant au moins deux boutons de commande mécanique (12, 14, 16), chacun des boutons étant associé à un moyen de sélection dudit bouton de commande, et des fonctions de différentes familles de fonctions étant affectées à chacun des boutons de commande,
**caractérisée en ce que**
suite à la sélection d'un desdits bouton de commande au moyen du moyen de sélection associé, une fonction de la même famille que la fonction affectée audit bouton de commande sélectionné est affectée à l'autre bouton de commande, et
l'interface homme machine est configurée pour communiquer avec un contrôleur (18) permettant de contrôler les fonctions affectées à chacun desdits boutons de commande.

2. Interface homme machine selon la revendication 1, comprenant en outre le contrôleur (18) permettant de contrôler les fonctions affectées à chacun desdits boutons de commande.

3. Interface homme machine selon l'une des revendications 1 ou 2, comprenant en outre au moins un moyen d'affichage permettant d'afficher une indication visuelle des fonctions affectées à chaque bouton de commande.

4. Interface homme machine selon l'une des revendications précédentes, dans laquelle chaque bouton de commande est associé à un moyen d'affichage permettant d'afficher une indication visuelle de la fonction affectée audit bouton de commande.

5. Interface homme machine selon l'une des revendications précédentes, dans laquelle chaque bouton de commande comprend un écran d'affichage.

6. Interface homme machine selon la revendication précédente, dans laquelle chaque écran d'affichage est un écran TFT.

7. Interface homme machine selon la revendication précédente, dans laquelle chaque écran d'affichage comprend en outre une dalle tactile.

8. Interface homme machine selon l'une des revendications précédentes, dans laquelle le contrôleur comprend en outre une horloge permettant de mesurer un premier temps écoulé depuis la commande d'une fonction au moyen d'un des boutons de commande et le contrôleur étant configuré pour affecter des fonctions de différentes familles de fonctions à chacun des boutons de commande lorsque le premier temps est supérieure à une première valeur seuil.

9. Interface homme machine selon l'une des revendications précédentes, dans laquelle le contrôleur est configuré pour que lors de la sélection d'un desdits boutons de commande au moyen du moyen de sélection associé, la fonction affectée à l'autre bouton de commande soit différente de la fonction affectée au bouton de commande sélectionné.

10. Interface homme machine selon l'une des revendications précédentes, comprenant en outre un moyen de retour, le contrôleur étant configuré pour affecter des fonctions de différentes familles de fonctions à chacun des boutons de commande lors de l'activation du moyen de retour.

11. Interface homme machine selon la revendication précédente, dans laquelle les moyens de sélection comprennent les moyens de retour à l'état initial de configuration des boutons de commande.

12. Interface homme machine selon la revendication précédente, dans laquelle le contrôleur comprend en outre une horloge permettant de mesurer un deuxième temps écoulé depuis l'activation d'un des moyens de retour et le contrôleur étant configuré pour prendre en compte la sélection d'un desdits boutons de commande au moyen du moyen de sélection associé lorsque le deuxième temps est supérieur à une deuxième valeur seuil.

13. Interface homme machine selon l'une des revendications précédentes, dans laquelle les familles de fonctions sont sélectionnées dans la liste consistant à des fonctions de commande de la climatisation du véhicule, des fonctions de commande du système audio du véhicule, des fonctions de commande du système de guidage du véhicule.

14. Tableau de commande d'un véhicule automobile comprenant une interface homme machine selon l'une des revendications précédentes.

## Patentansprüche

1. Mensch-Maschine-Schnittstelle (10) für ein Kraftfahrzeug, die mindestens zwei mechanische Betätigungsknöpfe (12, 14, 16) enthält, wobei jeder der Knöpfe einer Auswahleinrichtung des Betätigungsknopfs zugeordnet ist und Funktionen unterschiedlicher Familien von Funktionen jedem der Betätigungsknöpfe zugewiesen sind,
**dadurch gekennzeichnet, dass**
nach der Auswahl eines der Betätigungsknöpfe mittels der zugeordneten Auswahleinrichtung eine Funktion der gleichen Familie wie die dem ausgewählten Betätigungsknopf zugewiesene Funktion dem anderen Betätigungsknopf zugewiesen wird, und
die Mensch-Maschine-Schnittstelle konfiguriert ist, mit einem Steuergerät (18) zu kommunizieren, das es ermöglicht, die jedem der Betätigungsknöpfe zugewiesenen Funktionen zu steuern.

2. Mensch-Maschine-Schnittstelle nach Anspruch 1, die außerdem das Steuergerät (18) enthält, das es ermöglicht, die jedem der Betätigungsknöpfe zugewiesenen Funktionen zu steuern.

3. Mensch-Maschine-Schnittstelle nach einem der Ansprüche 1 oder 2, die außerdem mindestens eine Anzeigeeinrichtung enthält, die es ermöglicht, einen optischen Hinweis auf die jedem Betätigungsknopf zugewiesenen Funktionen anzuzeigen.

4. Mensch-Maschine-Schnittstelle nach einem der vorhergehenden Ansprüche, wobei jeder Betätigungsknopf einer Anzeigeeinrichtung zugeordnet ist, die es ermöglicht, einen optischen Hinweis auf die dem Betätigungsknopf zugewiesene Funktion anzuzeigen.

5. Mensch-Maschine-Schnittstelle nach einem der vorhergehenden Ansprüche, wobei jeder Betätigungsknopf einen Anzeigebildschirm enthält.

6. Mensch-Maschine-Schnittstelle nach dem vorhergehenden Anspruch, wobei jeder Anzeigebildschirm ein TFT-Bildschirm ist.

7. Mensch-Maschine-Schnittstelle nach dem vorhergehenden Anspruch, wobei jeder Anzeigebildschirm außerdem einen Touchscreen enthält.

8. Mensch-Maschine-Schnittstelle nach einem der vorhergehenden Ansprüche, wobei das Steuergerät außerdem einen Taktgeber enthält, der es ermöglicht, eine erste Zeit zu messen, die seit der Betätigung einer Funktion mittels eines der Betätigungsknöpfe vergangen ist, und das Steuergerät konfiguriert ist, Funktionen verschiedener Familien von Funktionen jedem der Betätigungsknöpfe zuzuweisen, wenn die erste Zeit über einem ersten Schwellwert liegt.

9. Mensch-Maschine-Schnittstelle nach einem der vorhergehenden Ansprüche, wobei das Steuergerät konfiguriert ist, damit bei der Auswahl eines der Betätigungsknöpfe mittels der zugeordneten Auswahleinrichtung die dem anderen Betätigungsknopf zugewiesene Funktion anders als die dem ausgewählten ausgewählten Betätigungsknopf zugewiesene Funktion ist.

10. Mensch-Maschine-Schnittstelle nach einem der vorhergehenden Ansprüche, die außerdem eine Rückstelleinrichtung enthält, wobei das Steuergerät konfiguriert ist, bei der Aktivierung der Rückstelleinrichtung jedem der Betätigungsknöpfe Funktionen verschiedener Familien von Funktionen zuzuweisen.

11. Mensch-Maschine-Schnittstelle nach dem vorhergehenden Anspruch, wobei die Auswahleinrichtungen die Rückstelleinrichtungen in den Anfangszustand der Konfiguration der Betätigungsknöpfe enthalten.

12. Mensch-Maschine-Schnittstelle nach dem vorhergehenden Anspruch, wobei das Steuergerät außerdem einen Taktgeber enthält, der es ermöglicht, eine zweite Zeit zu messen, die seit der Aktivierung einer der Rückstelleinrichtungen vergangen ist, und das Steuergerät konfiguriert ist, die Auswahl eines der Betätigungsknöpfe mittels der zugeordneten Auswahleinrichtung zu berücksichtigen, wenn die zweite Zeit über einem zweiten Schwellwert liegt.

13. Mensch-Maschine-Schnittstelle nach einem der vorhergehenden Ansprüche, wobei die Familien von Funktionen aus der Liste ausgewählt werden, die aus den Betätigungsfunktionen der Klimaanlage des Fahrzeugs, den Betätigungsfunktionen des Audiosystems des Fahrzeugs, den Betätigungsfunktionen des Zielführungssystems des Fahrzeugs bestehen.

14. Bedienfeld eines Kraftfahrzeugs, das eine Mensch-Maschine-Schnittstelle nach einem der vorhergehenden Ansprüche enthält.

## Claims

1. Motor-vehicle human-machine interface (10) comprising at least two mechanical control buttons (12, 14, 16), each of the buttons being associated with a means for selecting said control button, and functions of various families of functions being assigned to each of the control buttons,
**characterized in that**
following the selection of one of said control buttons by means of the associated selecting means, a function of the same family as the function assigned to said selected control button is assigned to the other control button, and
the human-machine interface is configured to communicate with a controller (18) allowing the functions assigned to each of said control buttons to be controlled.

2. Human-machine interface according to Claim 1, furthermore comprising the controller (18) allowing the functions assigned to each of said control buttons to be controlled.

3. Human-machine interface according to either of Claims 1 and 2, furthermore comprising at least one displaying means allowing a visual indication of the functions assigned to each control button to be displayed.

4. Human-machine interface according to one of the preceding claims, wherein each control button is associated with a displaying means allowing a visual indication of the function assigned to said control button to be displayed.

5. Human-machine interface according to one of the preceding claims, wherein each control button comprises a display screen.

6. Human-machine interface according to the preceding claim, wherein each display screen is a TFT screen.

7. Human-machine interface according to the preceding claim, wherein each display screen furthermore comprises a touch panel.

8. Human-machine interface according to one of the preceding claims, wherein the controller furthermore comprises a clock allowing a first time passed since the control of a function by means of one of the control buttons to be measured and the controller is configured to assign functions of various families of functions to each of the control buttons when the first time is greater than a first threshold value.

9. Human-machine interface according to one of the preceding claims, wherein the controller is configured so that, on the selection of one of said control buttons by means of the associated selecting means, the function assigned to the other control button is different from the function assigned to the selected control button.

10. Human-machine interface according to one of the preceding claims, furthermore comprising means for providing feedback, the controller being configured to assign functions of various families of functions to each of the control buttons on activation of the means for providing feedback.

11. Human-machine interface according to the preceding claim, wherein the selecting means comprise the means for providing feedback in the initial configuration state of the control buttons.

12. Human-machine interface according to the preceding claim, wherein the controller furthermore comprises a clock allowing a second time passed since the activation of one of the means for providing feedback to be measured and the controller is configured to take into account the selection of one of said control buttons by means of the associated selecting means when the second time is greater than a second threshold value.

13. Human-machine interface according to one of the preceding claims, wherein the families of functions are selected from the list containing control functions of the air-conditioning of the vehicle, control functions of the audio system of the vehicle and control functions of the navigation system of the vehicle.

14. Dashboard of a motor vehicle comprising a human-machine interface according to one of the preceding claims.
